Europäisches Patentamt

European Patent Office

Office européen des brevets

(11) Veröffentlichungsnummer : **0 111 790**
**B1**

# (12) EUROPÄISCHE PATENTSCHRIFT

(45) Veröffentlichungstag der Patentschrift :
16.04.86

(51) Int. Cl.⁴ : **E 05 C 17/34**

(21) Anmeldenummer : **83112045.6**

(22) Anmeldetag : **01.12.83**

(54) Fensteraufsteller.

(30) Priorität : **15.12.82 DE 3246396**
**04.06.83 DE 3320343**

(43) Veröffentlichungstag der Anmeldung :
**27.06.84 Patentblatt 84/26**

(45) Bekanntmachung des Hinweises auf die Patenterteilung : **16.04.86 Patentblatt 86/16**

(84) Benannte Vertragsstaaten :
**AT BE CH DE FR GB IT LI LU NL SE**

(56) Entgegenhaltungen :
**DE-C- 927 370**
**GB-A- 742 019**
**US-A- 4 339 844**

(73) Patentinhaber : **ASC Auto Spezial Carosserie Vertrieb GmbH**
**Schiessstrasse 55**
**D-4000 Düsseldorf 11 (DE)**

(72) Erfinder : **Farmont, Rolf, Dr.**
**Kölner Strasse 14**
**D-4000 Düsseldorf (DE)**

(74) Vertreter : **Schumacher, Horst, Dr. Dipl.-Phys.**
**Frühlingstrasse 43 (Ecke Holunderweg)**
**D-4300 Essen 1 (DE)**

**Beschreibung**

Die Erfindung betrifft einen Fensteraufsteller, insbesondere für Hebedächer an Fahrzeugen gemäß dem Oberbegriff des Patentanspruches 1.

Feststellbare Fensteraufsteller werden vor allem bei Klappfenstern in Kraftfahrzeugen verwendet. Sie sollen ein Feststellen des Fensters in verschiedenen Öffnungspositionen gewährleisten und dabei auch Druckunterschieden zu beiden Seiten der Fensterflächen, z. B. aufgrund von Winddruck, standhalten.

Aus der deutschen Patentschrift 853 269 ist ein Fensteraufsteller der oben näher bezeichneten Art bekannt, bei dem die Feststellvorrichtung aus einem in dem Kniegelenk angeordneten Reibungselement besteht. Dieser Fensteraufsteller wird dadurch betätigt, daß der Daumen und der Zeigefinger einer Hand stirnseitige Griffmulden aufweisende Enden eines Gelenkbolzens ergreifen und so quer zu dem Gelenkbolzen ziehen oder drücken. Eine derartige Betätigung des Fensteraufstellers erfordert in Verbindung mit dem Reibungselement eine erhebliche Kraftanstrengung, sofern das Reibungselement für ein sicheres Aufstellen des Fernsters ausreichend stramm eingestellt ist. Diese Kraftanstrengung in Verbindung mit dem notwendigen Suchen der Griffmulden beeinträchtigt aber auch die Konzentration eines Kraftfahrers, der einen solchen Fensteraufsteller während der Fahrt bedienen will ; außerdem kann er sich leicht die Finger zwischen den Hebeln einklemmen. Schließlich ist das Einstellen eines ganz bestimmten Öffnungswinkels bei einem derartigen Fensteraufsteller relativ schwierig, weil die Haftreibung größer als die Gleitreibung ist, und daher die gewünschte Öffnungsposition nur selten gleich beim ersten Versuch gefunden wird.

Ein Fensteraufsteller der eingangs genannten Art ist aus der französischen Patentschrift 324 327 bekannt, wonach Rastscheiben unter dem Axialdruck einer Feder im Eingriff miteinander gehalten werden und die so gestaltet sind, daß sich die verschiedenen Rastpositionen bereits dadurch verändern lassen, daß das Fenster in üblicher Weise weiter geöffnet oder geschlossen wird. Hierzu muß lediglich die Kraft der Feder überwunden werden, was aber dadurch erleichtert wird, daß die wirksame Hebellänge eines Fensterflügels vergleichsweise groß ist. Hingegen ist es nicht möglich, diesen bekannten Fensteraufsteller ohne große Kraftanstrengung in Form eines Griffes zum Öffnen und Schließen des Fensters zu benutzen, weil hierzu weder geeignete Angriffspunkte am Fensteraufsteller vorgesehen sind und dann die Federkraft der Feder stark reduziert werden müßte, da die wirksamen Hebellängen nun erheblich kürzer wären als beim üblichen Öffnen und Schließen des Fensters am Fensterflügel selbst. Eine solche Reduzierung der Federkraft und damit der Haltekraft des Rastmechanismus würde aber dazu führen, daß sich der Fensterflügel schon bei vergleichsweise geringem Winddruck selbsttätig weiter öffnet oder schließt und die Arretierung des Kniehebelgelenkes ohne äußeres Dazutun des Benutzers überwindet.

Der Erfindung liegt daher die Aufgabe zugrunde, einen Fensteraufsteller der eingangs genannten Art, insbesondere für Hebedächer für Fahrzeuge zu schaffen, der sich ohne große Kraftanstrengungen und Anforderungen an die Konzentration des Benutzers sicher in unterschiedlichen Positionen arretieren läßt ; Verletzungsgefahren sollen weitgehend ausgeschaltet werden ; der Rastmechanismus soll dabei eine möglichst hohe Haltekraft gewähren. Diese Aufgabe wird erfindungsgemäß durch die kennzeichnenden Merkmale des Patentanspruches 1 gelöst. Bevorzugt wird ein Fensteraufsteller gemäß den Merkmalen des Patentanspruches 2.

Ein solcher Fensteraufsteller hat den Vorteil, daß zu seiner Bedienung eine gesamte Hand benutzt wird und daher die Zug- oder Druckkraft des Armes des Bedieners uneingeschränkt zur Verfügung steht ; außerdem gewährleistet ein Rastmechanismus eine sicherere Bedienung des Fensteraufstellers hinsichtlich des Aufstellwinkels, da von Raststellung zu Raststellung immer dieselbe Kraft benötigt wird ; gleichwohl wird eine leichte Bedienbarkeit des Fensteraufstellers in Verbindung mit einer hohen Haltekraft des Rastmechanismus erreicht. Auf diese Weise braucht beim Bedienen des Fensteraufstellers nur der Federdruck überwunden zu werden, während im eingerückten Zustand der Rastscheibe das Kniegelenk auch außerordentlich hohen Belastungen auf das Fenster standhält. Ein derartiger Fensteraufsteller kann weitgehend aus Kunststoffteilen hergestellt sein, ohne daß sich bei längerem Gebrauch unzuträgliche Verschleißerscheinungen einstellen. Außerdem gestattet der erfindungsgemäße Rastmechanismus auch die Verwendung sehr kurzer Griffarme, da die zum Bedienen des Fensteraufstellers benötigte Kraft außerordentlich klein ist und sogar vom Daumen und Zeigefinger einer Hand aufgebracht werden kann ; die beiden Griffarme können daher auch als die Hebel nur geringfügig seitlich überragendes, den Rastmechanismus aufnehmendes Gelenkgehäuse ausgebildet werden.

Die am Umfang der Rastscheibe(n) verteilten Rastelemente können aus verzahnungsähnlichen Ausnehmungen bestehen, in die korrespondierende Nocken eines oder beider Hebel in Eingriff zu bringen sind. Bevorzugt werden aber Rastelemente in der Form von Rastnocken, die von einer der Stirnflächen der jeweiligen Rastscheibe in axialer Richtung abstehen und im eingerasteten Zustand mit korrespondierenden Löchern beider Hebel im Eingriff stehen. Auf diese Weise ist eine freie Beweglichkeit des Kniehebelgelenkes bei ausgerückter Rastscheibe(n) möglich, insbesondere kann ein das Ausrücken der Rastnocken aus nur jeweils einem der Hebel gestattender Anschlag vorgesehen sein, so daß sich die Rastscheibe(n) nur in bezug auf jeweils einen der Hebel verdreht, während der jeweils andere Hebel eine permanente Führung der Rastnocken gewährleistet.

Der Druckknopf für das Ausrücken der Rastscheibe(n) ist bevorzugt in der Stirnfläche eines der Griffarme angeordnet und wird dort mit dem Daumen einer Hand betätigt. Wenn korrespondierende Löcher in den Hebeln zu beiden Seiten der Rastscheibe bzw. für beide Rastscheiben vorgesehen sind, kann der Rastmechanismus auch um 180° gedreht in das Kniegelenk eingebaut sein, so daß seine Betätigung auch mit der anderen Hand ohne Schwierigkeiten möglich ist. Ein solcher Umbau wird dadurch vereinfacht, daß der dem Druckknopf gegenüberliegende Griffarm mit einer der Form des Druckknopfes angepaßten Steckkappe ausgerüstet ist. Ein derartiger Fensteraufsteller kann z. B. für Klappdächer (Hebedächer) eines rechts- oder linksgesteuerten Fahrzeugs verwendet werden, ohne daß er — mit Rücksicht auf den Wechsel der den Fensteraufsteller bedienenden Hand — andere Einzelteile erfordert.

Eine sich an der einen Rastscheibe abstützende Lagerhülse der anderen Rastscheibe gestattet auf besonders einfache Weise das gleichzeitige Ausrasten beider Rastscheiben.

Erfindungsgemäß ist in der Verschließstellung des Fensteraufstellers der Rastmechanismus bevorzugt ausgerastet, und die Hebel befinden sich dann in einer selbsthemmenden Position, indem die Kraftlinien zwischen den jeweiligen Gelenken beider Hebel einen kleinen, über die parallele Strecklage der Hebel hinausgehenden Winkel miteinander bilden. In dieser Position sind also die korrespondierenden Zähne des Rastmechanismus gerade so gegeneinander verdreht, daß sie sich nicht im Eingriff befinden. Ein schräg zur Fensterebene und entgegen der Richtung der Hebel in der Verschließstellung auf das Kniegelenk geführter Schlag führt daher ab einer gewissen Schlaghärte zum Öffnen des Fensteraufstellers. Wenn das Maß der Selbsthemmung in der Verschließstellung in geeigneter Stärke gewählt wird, kann also auf einfache Weise den besonderen Sicherheitsbestimmungen für in den Fahrgastraum vorstehende Bedienelemente in einem Fahrzeug Rechnung getragen werden.

Die Erfindung wird nachfolgend anhand eines in der Zeichnung dargestellten Ausführungsbeispiels des näheren erläutert. In der Zeichnung zeigen :

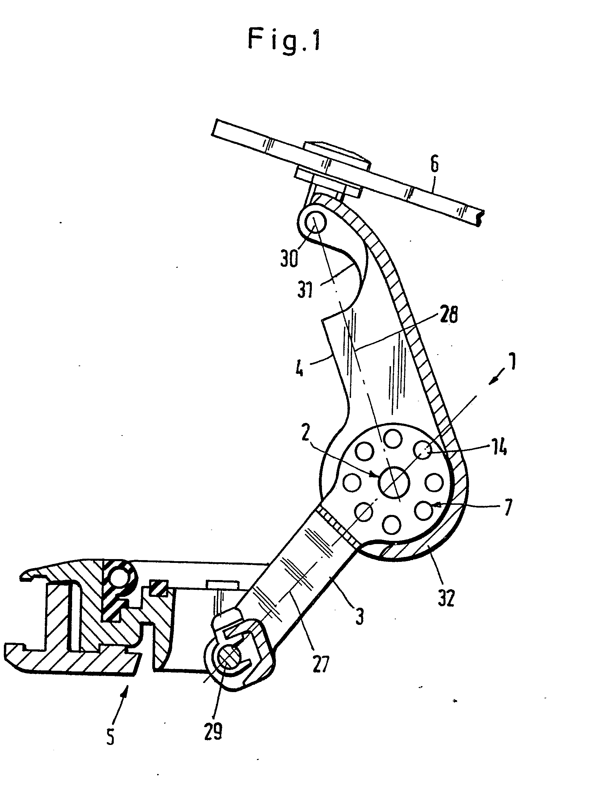

Figur 1   einen Fensteraufsteller in einer geöffneten Fensterposition in Seitenansicht, z. T. im Schnitt ;

Figur 2   den Fensteraufsteller gemäß Fig. 1 in Verschließstellung ;

Figur 3   einen Fensteraufsteller gemäß Fig. 1 in der Aufsicht, z. T. im Schnitt sowie

Figur 4   einen ähnlichen Fensteraufsteller in der Darstellung gemäß Fig. 3.

Ein Fensteraufsteller besteht aus durch ein Kniegelenk 2 miteinander gelenkig verbundenen Hebeln 3,4 eines Kniehebelgelenkes 1, die einerseits an einem Fensterrahmen 5 und andererseits an einem in der Zeichnung nicht näher dargestellten Fensterflügel 6 beweglich gelagert sind, sowie einem Rastmechanismus 7. Von dem Hebel 4 stehen zu beiden Seiten in Richtung der Achse des Kniegelenks 2 Griffarme 8,9 ab. Der Griffarm 8 ist stirnseitig mit einer Steckkappe 10 verschlossen, während ein Druckknopf 11 die Stirnfläche des anderen Steckarmes 9 bildet. Die Griffarme 8,9 bilden gemeinsam mit ihren Stirnflächen einen ergonomisch für die Bedienung mit einer Hand günstigen Griff mit abgerundeten, verletzungssicheren Übergängen zu den Stirnflächen. Die Griffarme sind formgleich und hohl, der Druckknopf 11 wird daher auf seiner radialen Außenfläche von der Innenwand des Griffarmes 9 geführt.

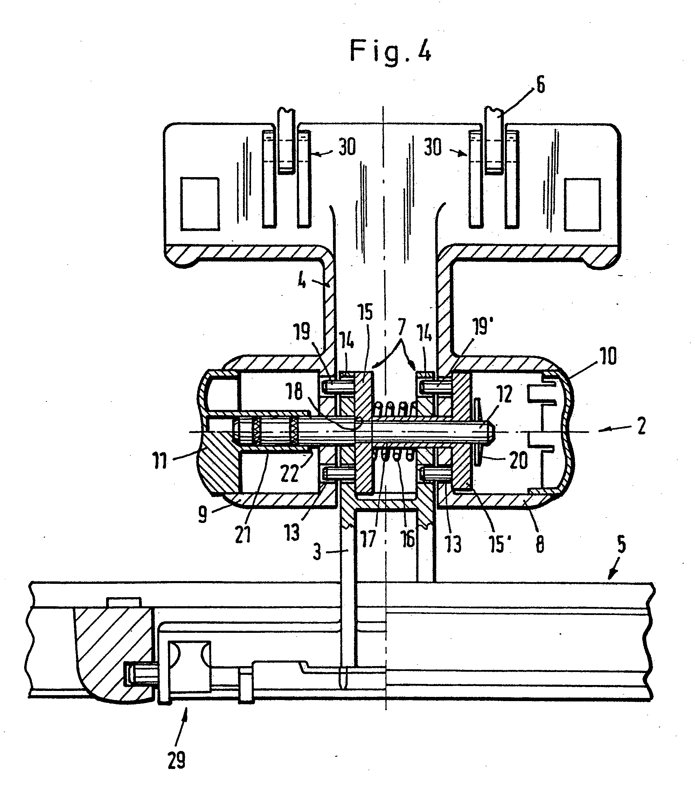

Die Hebel 3 und 4 weisen einen U-förmigen Querschnitt auf und sind im Bereich der U-Flanken mit acht auf einem Kreis (um einen durch zentrische Löcher in den U-Flanken gesteckten Gelenkbolzen 12) gleichmäßig verteilten Löchern 13, 14 versehen. Der Querschnitt des Hebels 4 ist um soviel größer, daß er an seiner Innenfläche die Außenfläche des Hebels 3 formschlüssig aufnimmt. Die U-Flanken sind im Bereich des Kniegelenkes 2 zu einer etwa kreisförmigen Fläche vergrößert, durch deren Mittelpunkt der Gelenkbolzen 12 durch beide Hebel fluchtend gesteckt wird. Ferner weisen die U-Flanken in einer 45°-Teilung um den Gelenkbolzen auf einem Kreis angeordnete Löcher 13, 14 auf, welche beim Bewegen des Kniehebelgelenkes nach jeweils einer 45°-Bewegung beider Hebel (in bezug auf das Kniegelenk) zur Flucht kommen. In einer solchen fluchtenden Position kann der Rastmechanismus 7 zum Eingriff gebracht werden. Hierzu ist innerhalb der U-Flanken des Hebels 3 eine zentrisch durchbohrte Rastscheibe 15 auf dem Gelenkbolzen 12 aufgesteckt und mittels einer Spiralfeder 16 einerseits gegen die gegenüberliegende U-Flanke und andererseits gegen einen Bund 18 des Lagerbolzens 12 abgestützt. Eine zweite Rastscheibe 15' (Fig. 4) ist ebenfalls zentrisch durchbohrt und mit einer Lagerhülse 17 für den Bolzen 12 einstückig verbunden ; diese Rastscheibe ist ebenfalls auf dem Gelenkbolzen 12 aufgesteckt und befindet sich außerhalb des Hebels 4 auf der dem Druckknopf 11 gegenüberliegenden Seite. Die Lagerhülse 17 ist auf der Seite der Rastscheibe 15' durch beide Hebel 3 und 4 gesteckt und stirnseitig gegen die Rastscheibe 15 abgestützt, von der sie mitbewegt wird. Die Rastscheibe(n) trägt (tragen) in axialer Richtung sich erstreckende, auf einem Kreis um die Achse in gleichmäßiger 45°-Teilung angeordnete Rastnocken 19 bzw. 19', die in den jeweiligen Raststellungen sowohl in die Löcher 14 als auch in die Löcher 13 der Hebel 3 und 4 eingreifen. Die Rastnocken haben zylindrische Gestalt, ihr Außendurchmesser ist geringfügig kleiner als die Durchmesser der Löcher 13 bzw. 14.

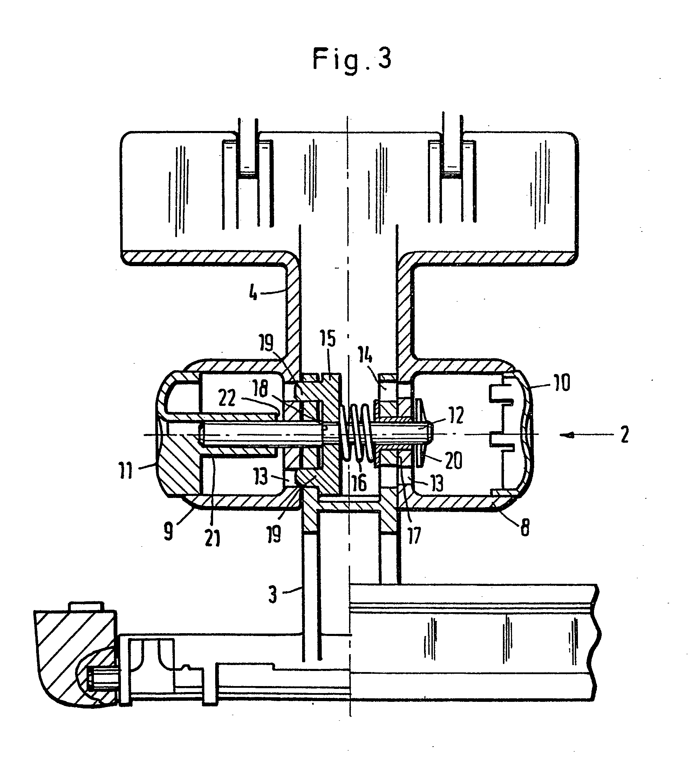

Sofern der Fensteraufsteller sich bei einem härteren Schlag auf das Kniegelenk 2 verstellen soll, ohne daß hierbei die Rastnocken 19 abbrechen oder unzuträglich stark verschleißen — worauf besonders bei Rastnocken aus Kunststoff zu achten ist — weisen die freien Enden der Rastnocken erfindungsgemäß die Gestalt einer Halbkugel (Fig. 3) auf, und die Löcher 13 besitzen einen geringfügig kleineren Durchmesser als der Rastnockendurchmesser. Auf diese Weise bilden die freien Enden der Rastnocken eine Aufgleitfläche für die nockenseitigen Kanten der Löcher 13, so daß bei einem Schlag vorgegebener Härte auf das Kniegelenk eine axiale Kraft auf die Rastscheibe ausgeübt wird, die ihr Verschieben gegen den Druck der Feder 16 und damit ihr völliges Ausrasten gestattet.

Der Gelenkbolzen 12 ist auf der Seite der Steckkappe 10 auf der Außenseite der einen U-Flanke des Hebels 4 durch eine übliche Ringsicherung 20 vor dem Herausfallen geschützt. Die Lagerhülse 17 wirkt nicht nur verschleißmindernd und bildet den Anschlag der Feder 16 (Fig. 3) bzw. die Abstützung der Rastscheibe 15' an der Rastscheibe 15 (Fig. 4), sondern sie füllt auch einen kleinen Zwischenraum zwischen der Außenfläche des Gelenkbolzens 12 und der entsprechenden Gelenkbohrung der Hebel 3 und 4 aus, der dadurch entsteht, daß der Gelenkbolzen aufgrund des Bundes 18 durckknopfseitig einen größeren Durchmesser aufweist, dennoch aber von beiden Seiten in das Kniegelenk 2 einzubauen sein soll. Der Druckknopf 11 ist auf die dickere Seite des Gelenkbolzens 12 mittels eines hülsenförmigen gleitschlüssigen Fortsatzes 21, der stirnseitig einen Anschlag 22 bildet, aufgesteckt. Dieser Anschlag wird so gewählt, daß der Druckknopf 11 die Rastscheibe(n) 15 (und 15') nur um einen solchen Weg axial verschieben kann, wie es zum Ausrasten der Rastnocken 19 (und 19') aus den Löchern 13 des Hebels 4 bzw. den Löchern 14 des Hebels 3 erforderlich ist.

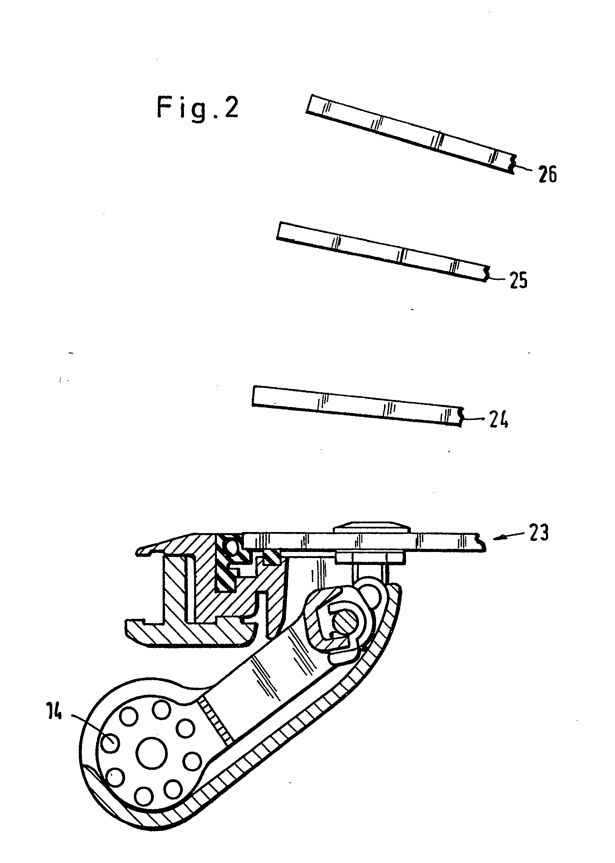

In der Fig. 2 sind die Verschließstellung 23 sowie Öffnungsstellungen 24 bis 26 des Fensterflügels 6 dargestellt. In der Verschließstellung bilden die Verbindungslinien 27, 28 zwischen dem Kniehebelgelenk 2 und dem rahmenseitigen Gelenk 29 des Hebels 3 sowie dem fensterseitigen Gelenk 30 des Hebels 4 einen derart kleinen Winkel, daß die Gelenke 2, 29 und 30 nicht mehr auf einer Geraden liegen, sondern das Gelenk 29 über die Verbindungslinie 28 hinaus in einer Ausnehmung 31 des Hebels 4 ruht und sich somit — über seinen Totpunkt hinaus — in einer selbsthemmenden Position befindet. In dieser Position sind die Rastnocken 19 (und 19') und die Löcher 13 bzw. 14 nicht im Eingriff, so daß der Druckknopf 11 mit seiner z. B. roten Signalfarbe nur von der Stirnseite, aber nicht im rechten Winkel dazu zu erkennen ist, da er sich praktisch vollständig in dem Griffarm 9 befindet. Der erste Eingriff der Rastnocken 19 (und 19') und der Löcher 13 bzw. 14 ergibt sich in der Position 24 des Fensters, für deren Erreichen das Kniegelenk 2 um einen erheblich größeren Winkel als 45° um das Gelenk 29 am Fensterrahmen 5 gedreht werden muß. Ein in bezug auf das geschlossene Fenster schräg und entgegen der Richtung der Hebel 3, 4 ausgeführter Schlag auf das Kniegelenk 2 führt — wenn dieser Schlag ausreicht, die Selbsthemmung des Fensteraufstellers zu überwinden — zu einem erheblichen Ausweichen des Kniegelenkes, bevor diese Bewegung in der ersten Öffnungsstellung gebremst wird — wenn nicht sogar diese Bewegung noch fortgesetzt wird, da die runden Enden (Fig. 3) der Rastnocken 19 keinen starren Eingriff bilden.

Vorteilhafterweise wird die Selbsthemmung derart bemessen, daß ein unter 15° in bezug auf das geschlossene Fenster gegen das Kniegelenk 2 entgegen der Richtung der Hebel 3,4 mit einer Kraft von höchstens 400 N ausgeführter Schlag zum selbsttätigen Öffnen des Fensteraufstellers führt. Auf diese Weise wird also ein weitgehender Unfallschutz realisiert. Außerdem steht der Druckknopf 11 in den verschiedenen Öffnungspositionen eines Fensters immer aus dem freien Ende des Griffarmes 9 heraus; auf diese Weise ist er bei Verwendung einer Signalfarbe zu sehen bzw. auch von dem Bedienfinger ertastbar, so daß jederzeit ohne Schwierigkeiten festzustellen ist, ob das Klappfenster ordentlich geschlossen ist.

Eine Nase 32 am kniegelenkseitigen Ende des Hebels 4 bildet einen Anschlag gegen den Hebel 3 für den Fall, daß die maximal zulässige Öffnungsstellung des Fensters erreicht wird.

Die beste Lösung ergibt sich aus der Darstellung gemäß Fig. 4.

Bezugszeichenliste

1 Kniehebelgelenk
2 Kniegelenk
3 Hebel
4 Hebel
5 Fensterrahmen
6 Fensterflügel
7 Rastmechanismus
8 Griffarm
9 Griffarm
10 Steckkappe
11 Druckknopf
12 Gelenkbolzen
13 Löcher
14 Löcher
15 Rastscheibe
15' Rastscheibe
16 Spiralfeder
17 Lagerhülse
18 Bund
19 Rastnocken (Rastelement)
19' Rastnocken (Rastelement)
20 Ringsicherung
21 Fortsatz
22 Anschlag
23 Verschließstellung
24 Öffnungsstellung
25 Öffnungsstellung
26 Öffnungsstellung

27 Verbindungslinie
28 Verbindungslinie
29 Gelenk
30 Gelenk
31 Ausnehmung
32 Nase

**Patentansprüche**

1. Fensteraufsteller, bestehend aus einem beidseitig beweglich gelagerten, ein Kniegelenk (2) sowie Hebel (3, 4) aufweisenden Kniehebelgelenk (1) mit einem eine axial verschieblich gelagerte, gegen einen Federdruck ausrückbare Rastscheibe (15) mit auf ihrem Umfang verteilten Rastelementen aufweisenden Rastmechanismus (7), gekennzeichnet durch

a) einen den Rastmechanismus (7) aufnehmenden Griff aus zwei von einem der Hebel in die Richtung der Achse des Kniegelenkes beidseitig abstehenden Griffarmen (8, 9) und

b) einen in einem der Griffarme angeordneten Druckknopf (11) für das Ausrücken der Rastscheibe (15).

2. Fensteraufsteller nach Anspruch 1, dadurch gekennzeichnet, daß eine zweite gegen denselben Federdruck ausrückbare Rastscheibe (15') mit auf ihrem Umfang in gleicher Weise wie bei der Rastscheibe (15) verteilten Rastelementen (19') koaxial und parallel zu der Rastscheibe (15) angeordnet und mit dieser gemeinsam betätigbar ist.

3. Fensteraufsteller nach Anspruch 1 oder 2, dadurch gekennzeichnet, daß die Rastelemente in der Form von Rastnocken (19, 19') von einer der Stirnflächen der Rastscheibe(n) (15, 15') in axialer Richtung abstehen und im eingerasteten Zustand mit korrespondierenden Löchern (13, 14) beider Hebel (3, 4) im Eingriff stehen.

4. Fensteraufsteller nach Anspruch 3, gekennzeichnet durch korrespondierende Löcher (13, 14) in den Hebeln (3, 4) zu beiden Seiten der Rastscheibe(n) (15, 15').

5. Fensteraufsteller nach Anspruch 1, dadurch gekennzeichnet, daß der Druckknopf (11) die Stirnfläche eines der Griffarme bildet.

6. Fensteraufsteller nach Anspruch 5, gekennzeichnet durch eine der Form des Druckknopfes angepaßte Steckkappe (10) für den anderen Griffarm.

7. Fensteraufsteller nach Anspruch 3, gekennzeichnet durch einen das Ausrücken der Rastnocken (19 bzw. 19') aus den Löchern (13 bzw. 14) nur jeweils eines der Hebel (4 bzw. 3) gestattenden Anschlag (22).

8. Fensteraufsteller nach einem der Ansprüche 1 bis 7, gekennzeichnet durch jeweils acht auf einem Umfang der Rastscheibe(n) (15, 15') gleichmäßig verteilte Rastnocken (19, 19').

9. Fensteraufsteller nach Anspruch 1 oder 2, gekennzeichnet durch einen in der Verschließstellung (23) des Kniehebelgelenkes (1) ausgerasteten Rastmechanismus (7) und sich in einer selbsthemmenden Position befindenden Hebel (3, 4).

10. Fensteraufsteller nach Anspruch 9, gekennzeichnet durch eine derartige Selbsthemmung, daß sich das Kniehebelgelenk (1) bei einem schräg zur Fensterebene und entgegen der Richtung der Hebel (3, 4) in der Verschließstellung (23) auf das Kniegelenk (2) ausgeführten Schlag einer bestimmten maximalen Stärke öffnet.

11. Fensteraufsteller nach Anspruch 1 oder 2, dadurch gekennzeichnet, daß zumindest die Hebel (3, 4) sowie die Rastscheibe(n) (15, 15') aus Kunststoff bestehen.

12. Fensteraufsteller nach Anspruch 2, dadurch gekennzeichnet, daß sich eine Lagerhülse (17) der Rastscheibe (15') an der Rastscheibe (15) abstützt.

**Claims**

1. A window mounting, comprising an articulated lever joint (1) disposed so as to be displaceable on both sides and comprising a universal joint (2) and levers (3, 4) with a locking mechanism (7) which comprises a locking disc (15) comprising locking elements distributed on its circumference, being axially displaceably mounted, and being disengageable against spring pressure, characterised by

a) a grip which contains the locking mechanism (7) and comprises two grip arms (8, 9) projecting from one of the levers on both sides in the direction of the axis of the universal joint and

b) a push button (11) arranged in one of the grip arms for disengaging the locking disc (15).

2. A window mounting according to claim 1, characterised in that a second locking disc (15'), disengageable against the same spring pressure, comprises locking elements (19') distributed on its circumference in the same way as in the case of the locking disc (15) and is arranged coaxially and parallel with respect to the locking disc (15) and is actuable simultaneously therewith.

3. A window mounting according to claim 1 or 2, characterised in that the locking elements in the form of locking cams (19, 19'), project from one of the end faces of the locking disc(s) (15, 15') in an axial direction and in the locked state are engaged in with corresponding holes (13, 14) of both levers (3, 4).

4. A window mounting according to claim 4, characterised by corresponding holes (13, 14) in the levers (3, 4) on both sides of the locking disc(s) (15, 15').

5. A window mounting according to claim 1, characterised in that the push button (11) forms the end face of one of the grip arms.

6. A window mounting according to claim 1, characterised by an insertion cap (10) for the other grip arm, adapted to the shape of the push button.

7. A window mounting according to claim 3, characterised by a stop (22) which permits disengagement of the locking cams (19 or 19') from the holes (13 or 14) of only one of the levers (4 or 3) in each case.

8. A window mounting according to any one of claims 1 to 7, characterised by eight locking cams (19, 19') in each case distributed evenly on a circumference of the locking disc(s) (15, 15').

9. A window mounting according to claim 1 or 2, characterised by a locking mechanism (7) which is disengaged in the closed position (23) of the articulated lever joint (1) and levers (3, 4) in a self-locking position.

10. A window mounting according to claim 9, characterised by a self-locking device of this type, in that the articulated lever joint (1) opens when a force of a predetermined maximum strength is exerted onto the universal joint (2) perpendicular to the plane of the window and away from the direction of the levers (3, 4) in the closed position.

11. A window mounting according to claim 1 or 2, characterised in that at least the levers (3, 4) and the locking disc(s) (15, 15') are made of plastics material.

12. A window mounting according to claim 1 or 2, characterised in that one bearing sleeve (17) of the locking disc (15') is supported on the locking disc (15).

**Revendications**

1. Compas pour fenêtre constitué par une articulation à leviers coudés (1) montée bilatéralement sur des paliers de manière à pouvoir se déplacer et comportant une genouillère (2) et des leviers (3, 4) ainsi qu'un mécanisme d'arrêt (7) comprenant un disque d'arrêt (15) monté sur palier de manière à pouvoir être déplacé dans le sens axial en s'opposant à la pression d'un ressort et muni d'éléments d'arrêt répartis sur son pourtour, caractérisé en ce que

a) il comporte une poignée qui contient le mécanisme d'arrêt (7) et est constituée par deux bras de poignée (8, 9) qui dépassent des deux côtés de l'un des leviers dans la direction de l'axe de la genouillère,

b) et un bouton de pression (11) monté dans l'un des bras de la poignée et permettant de déplacer le disque d'arrêt (15).

2. Compas pour fenêtre selon la revendication 1, caractérisé en ce qu'un deuxième disque d'arrêt (15') qui peut être déplacé en s'opposant à la même pression de ressort et comporte sur son pourtour des éléments d'arrêt (19') répartis de la même manière que sur le disque d'arrêt (15) est monté de manière à avoir le même axe que le disque d'arrêt (15) et à lui être parallèle et peut être manœuvré en même temps que lui.

3. Compas pour fenêtre selon l'une des revendications 1 ou 2, caractérisé en ce que les éléments d'arrêt sont constitués par des cames d'arrêt (19, 19') qui dépassent des surfaces frontales du disque ou des disques d'arrêt (15, 15') dans le sens axial et se mettent en prise, à l'arrêt, dans des trous correspondants (13, 14) ménagés dans les deux leviers (3, 4).

4. Compas pour fenêtre selon la revendication 3, caractérisé en ce que les leviers (3, 4) comportent des trous correspondants (13, 14) dirigés vers les deux côtés du disque ou des disques d'arrêt (15, 15').

5. Compas pour fenêtre selon la revendication 1, caractérisé en ce que le bouton de pression (11) constitue la surface frontale de l'un des bras de la poignée.

6. Compas pour fenêtre selon la revendication 5, caractérisé en ce qu'il comporte, pour l'autre bras de la poignée un capuchon (10) adapté à la forme du bouton de pression.

7. Compas pour fenêtre selon la revendication 3, caractérisé en ce qu'il comporte une butée (22) qui permet le dégagement des cames d'arrêt (19 ou 19') hors des trous (13 ou 14) de chacun des leviers (4 ou 3).

8. Compas pour fenêtre selon l'une des revendications 1 à 7, caractérisé en ce que le pourtour de chaque disque d'arrêt (15, 15') comporte huit cames d'arrêt (19, 19') uniformément réparties.

9. Compas pour fenêtre selon l'une des revendications 1 ou 2, caractérisé en ce qu'il comporte un mécanisme d'arrêt (7) qui est arrêté dans la position de fermeture (23) de l'articulation à leviers coudés (1) et un levier (3, 4) qui se trouve dans une position d'auto-blocage.

10. Compas pour fenêtre selon la revendication 9, caractérisé en ce que son blocage automatique résulte du fait que l'articulation à leviers coudés (1) s'ouvre en cas de choc d'une violence maximale déterminée se produisant dans la position de fermeture (23) sur la genouillère (2) dans une direction oblique par rapport au plan de la fenêtre et en sens inverse de la direction des leviers (3, 4) dans la position de fermeture (23).

11. Compas pour fenêtre selon l'une des revendications 1 ou 2, caractérisé en ce que les leviers (3, 4) et le ou les disques d'arrêt (15, 15') sont en matière plastique.

12. Compas pour fenêtre selon la revendication 2, caractérisé en ce qu'une enveloppe de palier (17) du disque d'arrêt (15') prend appui sur le disque d'arrêt (15).

# Fig.1

Fig.2

26

25

24

23

14

# Fig.3

## Fig. 4